# FASCICULE DE BREVET EUROPEEN

(11) **EP 0 546 938 B1**
(45) Date de publication et mention de la délivrance du brevet: **12.11.1997**
(21) Numéro de dépôt: 92403344.2
(22) Date de dépôt: 09.12.1992
(51) Int. Cl.: B60Q 1/068, B60Q 1/04

(54) **Projecteur de véhicule automobile équipé de moyens de fixation**
Fahrzeugscheinwerfer mit Befestigungseinrichtung
Headlamp for vehicle with means of fixing

(30) Priorité: 13.12.1991 FR 9115506
(43) Date de publication de la demande: 16.06.1993
(73) Titulaire: VALEO VISION, 93000 Bobigny (FR)
(72) Inventeur: Ravier, Jean-Paul, F-94100 Saint Maur Des Fosses (FR); Deslandres, Antoine, F-94470 Boissy-Saint-Leger (FR); Pinson, Ghislaine, F-92390 Villeneuve la Garenne (FR)
(74) Mandataire: Martin, Jean-Jacques

(56) Documents cités:
- EP-A- 0 178 407
- DE-A- 2 732 895
- DE-A- 3 123 053
- DE-B- 1 049 252
- DE-C- 720 509
- FR-A- 2 494 812
- FR-A- 2 657 148

## Description

La présente invention concerne d'une façon générale les projecteurs de véhicules automobiles.

Classiquement, un projecteur comprend un boîtier, une glace fermant une ouverture antérieure du boîtier, et un réflecteur et une lampe montés dans le boîtier.

Le boîtier est fixé rigidement sur la caisse du véhicule, de manière que la glace vienne prendre place dans l'ouverture de la carrosserie qui lui est réservée, sans être fixée à ladite carrosserie.

Il existe certains projecteurs dépourvus de boîtier séparé, le réflecteur et la glace définissant une enceinte fermée et le projecteur étant fixé sur le véhicule par des aménagements appropriés prévus à l'arrière ou sur le coté du réflecteur.

On recherche à l'heure actuelle, pour des raisons de style et d'aérodynamisme, à réaliser un centrage aussi parfait que possible de la glace dans l'ouverture de la carrosserie, ainsi qu'un affleurement également aussi parfait que possible de la face externe de la glace avec la carrosserie.

Ces objectifs s'avèrent difficiles à atteindre dans la pratique avec les projecteurs classiques du type précité étant donné les tolérances de fabrication des diverses pièces entrant en jeu. Plus précisément, les écarts dimensionnels au niveau de la glace, du boîtier ou du réflecteur sur lequel est fixée la glace, de la caisse et de la carrosserie peuvent se cumuler pour atteindre des valeurs tout à fait excessives, de l'ordre de plusieurs millimètres, qui conduisent en pratique à un positionnement tout à fait défecteux de la glace dans son ouverture.

Une solution connue pour pallier cette difficulté consiste à prévoir des moyens de montage réglables entre le boîtier du projecteur et la caisse du véhicule. Une telle solution augmente cependant indésirablement le coût de revient du projecteur, et rend son montage long et fastidieux.

On connaît par le document DE-A-27 32 895 un projecteur sans boîtier, dans lequel une bague est logée dans une ouverture de la carrosserie, reçoit la glace et reçoit également de façon réglable le réflecteur. Toutefois, les problèmes de tolérances évoqués plus haut sont exactement les mêmes pour un boîtier et pour une telle bague.

On connaît également par DE-A-720 709 un projecteur dans lequel la glace est maintenue dans l'ouverture de la carrosserie par des moyens de montage complexes, qui reçoivent également de façon réglable le réflecteur.

On connaît enfin par le document DE-A-31 23 053 un projecteur selon le préambule de la revendication 1 annexée, dans lequel l'alignement de la carrosserie et de la glace est satisfaisant.

Toutefois, ce projecteur comporte également, de façon classique, un boîtier qui est également fixé sur la carrosserie. Sur ce boîtier est monté de façon réglable le réflecteur.

La présente invention vise à proposer un projecteur dans lequel on simplifie les moyens de montage réglable du réflecteur, et dans lequel on puisse se passer de boîtier, tout en conservant les avantages d'une glace montée directement sur la carrosserie.

Elle concerne à cet effet un projecteur tel que défini dans la revendication 1.

Des aspects préférés de ce projecteur sont définis dans les sous-revendications 2 à 4.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
la figure 1 est une vue en coupe horizontale schématique d'un projecteur selon l'invention,
la figure 2 est une vue en coupe selon la ligne IIIA-IIIA de la figure 5, faite à travers la carrosserie du véhicule,
la figure 3 est une vue en coupe selon la ligne IIIB-IIIB de la figure 5, faite à travers la carrosserie du véhicule,
la figure 4 est une vue en coupe selon la ligne IV-IV de la figure 5,
la figure 5 est une vue partielle de l'arrière d'un projecteur selon une forme de réalisation concrète de l'invention,
la figure 6 est une vue en coupe selon la ligne VI-VI de la figure 5,
la figure 7 est une vue en coupe selon la ligne VII-VII de la figure 5,
la figure 8 est une vue en coupe selon la ligne VIII-VIII de la figure 5, et
la figure 9 est une vue en coupe horizontale d'un projecteur selon une autre forme de réalisation concrète de l'invention.

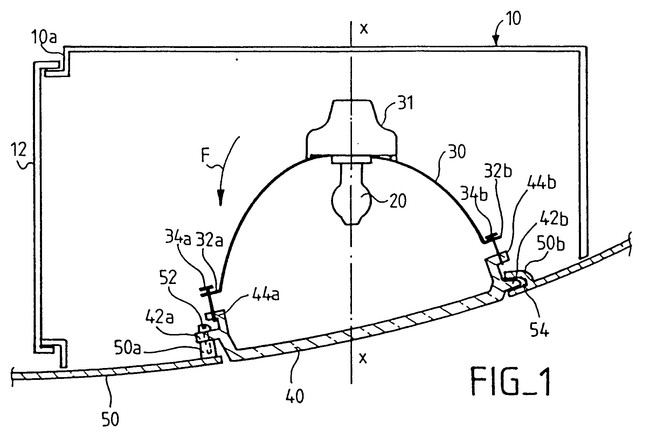

En référence tout d'abord à la figure 1, on a représenté schématiquement un projecteur qui comprend une lampe 20, un réflecteur 30 et une glace frontale 40, de préférence en matière plastique transparente moulée. La carosserie du véhicule dans la région du projecteur est indiquée en 50. Selon un aspect de l'invention, le projecteur en lui-même est dépourvu de boîtier, ce dernier étant défini seulement par exemple par une conformation appropriée d'un élément rapporté tel qu'une poutre transversale prévue de façon classique en soi dans la région de l'avant du véhicule, de manière à définir un logement 10 pour le projecteur.

On observe que l'ensemble du projecteur constitué par la lampe, le réflecteur et la glace est fixé sur la carrosserie 50 du véhicule. Plus précisément, dans cet exemple, la glace 40 comporte une ou plusieurs languettes latérales 42b qui sont aptes à être engagées dans des cavités essentiellement complémentaires 54 formées dans la carrosserie 50. Ces cavités sont définies par des membrures rentrantes 50b formées dans la carrosserie, en arrière de sa paroi principale, dans la région d'un bord latéral d'une ouverture formée dans ladite carrosserie pour recevoir la glace. A proximité du bord latéral opposé de cette ouverture, la carrosserie est formée, sur sa face arrière, avec une ou plusieurs bossages ou tétons 50a dans lesquels sont formés par exemple des trous taraudés.

Sur ce même côté, la glace comporte une ou plusieurs pattes latérales 42a dans lesquels sont formés des trous pour l'introduction de vis 52 aptes à être engagées dans les trous taraudés précités.

Le réflecteur 30 est relié à la glace par l'intermédiaire de moyens de liaison, schématiquement indiqués en 34a, 34b, qui peuvent être de conception classique en soi, en permettant notamment le réglage, manuel ou motorisé, de l'orientation du réflecteur en site et/ou en azimut.

On a également représenté schématiquement des ailes 44a, 44b prévues sur la glace et des ailes 32a, 32b prévues au niveau du bord antérieur du réflecteur 30, entre lesquels peuvent agir les moyens de liaison 34a, 34b.

La référence 31 désigne un capuchon venant se mettre en place à l'arrière du trou de fond du réflecteur pour abriter les connexions électriques avec la lampe 20.

La partie de la poutre transversale du véhicule définissant le logement du projecteur est indiquée en 10. Elle comprend sur sa face latérale 10a opposée aux cavités 54 de la carrosserie une ouverture fermée par un couvercle amovible 12.

L'ensemble constitué par la lampe 20, le réflecteur 30 et la glace 40 peut être introduit dans le logement latéralement à travers l'ouverture précitée. Durant cette mise en place, l'opérateur positionne l'ensemble 20-30-40 de manière à introduire la ou les languettes 42b dans la ou les cavités associées 54, puis fait pivoter ledit ensemble autour d'un axe de pivotement défini par lesdites languettes, selon la flèche F, pour appliquer la ou les pattes 42a contre le ou les tétons 50a, la ou les vis 52 étant ensuite mises en place et serrées pour fixer rigidement ledit ensemble.

Bien entendu, on peut remplacer la fixation par les vis 52, de même que le maintien par les languettes et cavités, par tout autre moyen mécaniquement équivalent, notamment par des clipsages. Un collage peut également être envisagé.

On réalise ainsi un nouveau concept de projecteur, plus économique et dans lequel tous les problèmes de jeux ou de tolérances de fabrication de la carrosserie et/ou d'un boîtier, conduisant dans la technique antérieure à un désaffleurement de la glace par rapport à la carrosserie, sont supprimés, avec en corollaire une suppression possible du boîtier habituellement nécessaire pour assurer la fixation du projecteur, auquel cas la caisse du véhicule ou un élément rapporté sur celle-ci est conçu pour définir un logement approprié pour le projecteur, en jouant le rôle dudit boîtier.

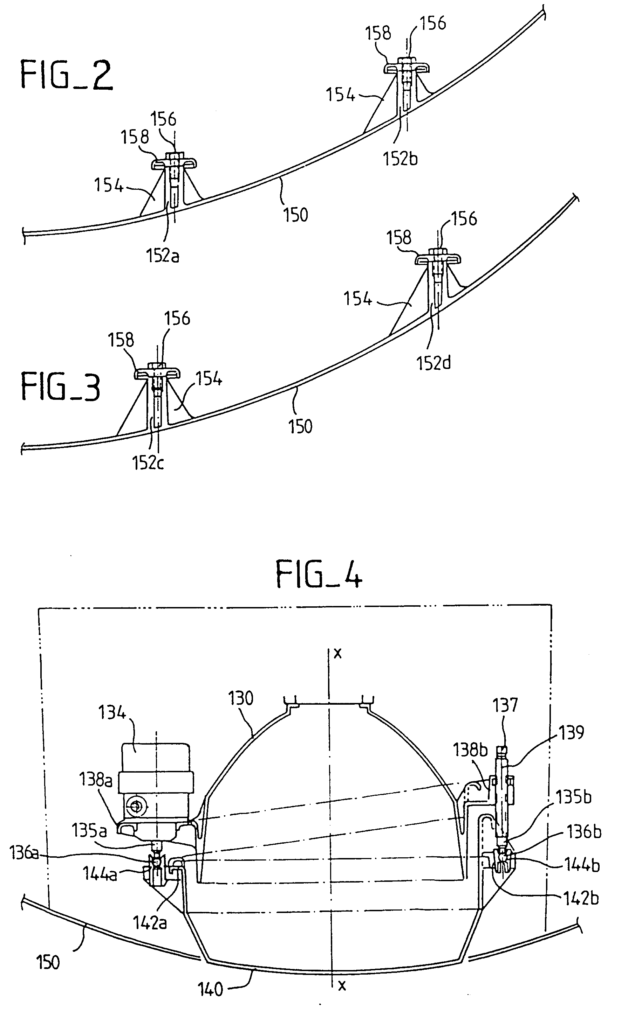

En référence maintenant aux figures 2 à 8, on va décrire une première forme de réalisation concrète d'un projecteur selon l'invention. Ce projecteur présente la même organisation générale que sur la figure 1, c'est-à-dire que la glace est fixée sur la carrosserie, tandis que le réflecteur portant la lampe est monté de façon réglable sur la glace.

Les figures 2 et 3 montrent la carrosserie 150 dans la région de l'ouverture prévue pour la glace, cette carrosserie étant pourvue sur sa face interne de quatre tiges saillantes 152a-152d présentant un taraudage central à leur extrémité libre. Des membrures 154 assurent la bonne tenue mécanique de ces tiges. Des boulons 156, en association avec des rondelles 158, vont permettre d'assurer la fixation de la glace 140 sur la carrosserie.

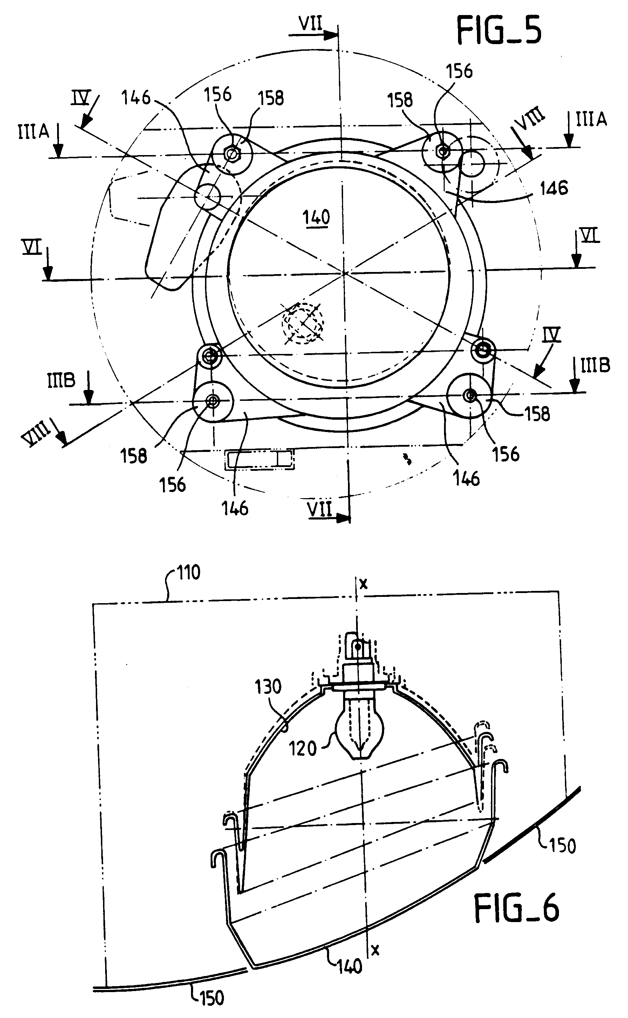

A cet égard, comme le montre bien la figure 5, la glace 140 comporte quatre pattes latérales 146 pouvues chacune d'un trou pour le passage du boulon associé.

Le réflecteur 130 est monté sur la glace à l'aide d'un dispositif conventionnel en soi, à trois pivots formant trois points d'appui disposés aux trois sommets d'un triangle rectangle, l'un des points d'appui étant fixe et les deux autres étant mobiles parallèlement à l'axe optique x-x du projecteur pour permettre le réglage du faisceau en site et en azimut.

Les références 142a à 142c désignent trois pattes réalisées d'un seul tenant avec la glace 140, chaque patte comportant un passage traversant dans lequel est clipsé un élément intermédiaire, respectivement 144a à 144c, définissant un logement sphérique.

De façon correspondante, le réflecteur 130 est équipé de trois tiges, respectivement 135a à 135c, aux extrémités libres desquelles sont respectivement prévues trois têtes sphériques 136a à 136b engagées par cloquage dans les logements sphériques, en définissant les trois points d'appui précités.

comme le montre la figure 4, la tige 135a est commandée en déplacement le long de son axe par un moteur électrique 134 fixé sur une partie en équerre 138a venue de moulage avec le réflecteur 130, pour assurer le réglage en site du faisceau. Cette figure montre également que la tige 135b est définie par un élément fileté 139 vissé dans un trou taraudé complémentaire formé dans une patte latérale 138b d'un seul tenant avec le réflecteur. Une tête de manoeuvre 137 solidaire avec l'élément fileté 139 permet le réglage manuel, à l'aide d'un outil approprié, de l'orientation du faisceau en azimut.

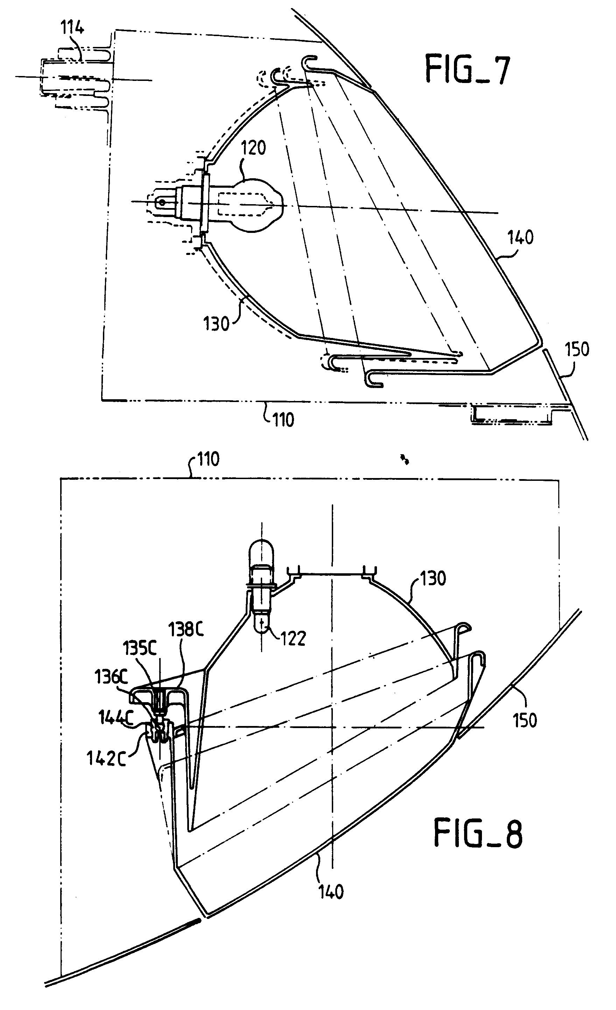

La figure 8 montre quant à elle le point d'appui fixe, la tête sphérique correspondante 136c étant prévue à l'extrémité libre d'une tige filetée 135c vissée, sans possibilité de manoeuvre de l'extérieur, dans un trou taraudé complémentaire formé dans une autre patte 138c formée d'un seul tenant avec le réflecteur 130.

Le projecteur est équipé par ailleurs d'une lampe auxilaire 122 pour la fonction feu de position (figure 8).

La référence 110 désigne la partie de la poutre transversale avant du véhicule qui définit un logement pour le projecteur. La figure 7 montre que cette poutre définit un passage de câbles 114, pouvant être fermé par un capuchon (non représenté), pour le passage des câbles d'alimentation des lampes 120, 122 et du moteur 134 de réglage en site.

On observera que, dans la forme de réalisation concrète décrite ci-dessus, l'étanchéité de l'espace intérieur du projecteur peut être assurée avantageusement en prévoyant, au niveau de la jonction entre la poutre transversale et la carrosserie, un joint, un mastic ou analogue, l'étanchéité étant complétée par un capuchon (non représenté) destiné à recouvrir le passage de câbles 114. En variante, la poutre et la carrosserie 150 peuvent être à l'origine solidaires l'une de l'autre, par exemple soudées, et constituer un élément unique de la caisse du véhicule. Selon une autre possibilité encore, la poutre définissant le logement 10 ou 110 et la carrosserie 50 ou 150 peuvent être d'un seul tenant.

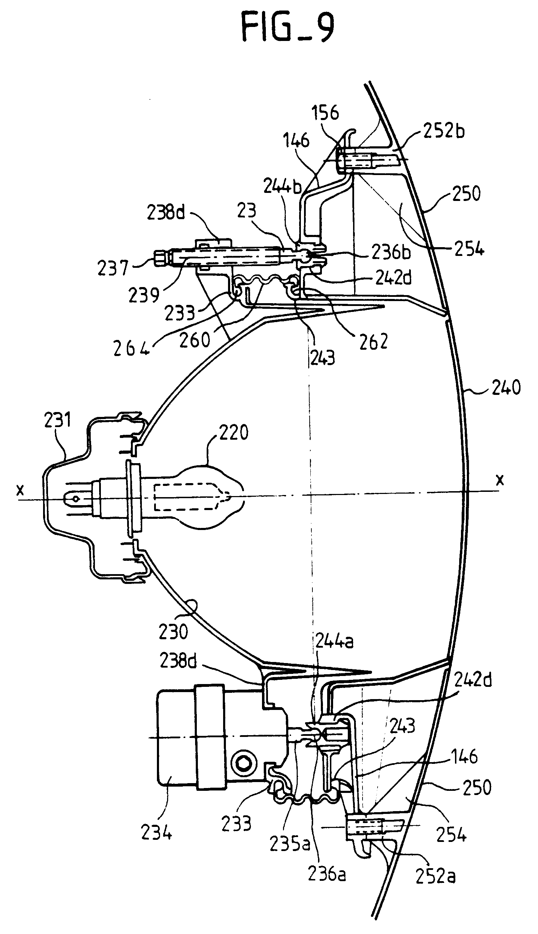

Une deuxième forme de réalisation concrète de l'invention est illustrée sur la figure 9. Les mêmes parties ou éléments que sur les figures 2 à 8 sont désignées par les mêmes références, avec toutefois le chiffre des centaines augmenté d'une unité, et ne seront pas décrits à nouveau.

Comme on peut l'observer, l'étanchéité du projecteur vis-à-vis des poussières et de l'humidité est réalisée à l'aide d'un soufflet annulaire périphérique 260 qui entoure entièrement le réflecteur. Ce soufflet comporte tout le long de ses deux bords opposés deux bourrelets 262 et 264, respectivement avant et arrière. Une partie 242d de la glace 240 qui est en retrait par rapport à sa partie centrale de passage de la lumière comporte sur toute sa périphérie une gorge 243 tournée vers l'extérieur, dans laquelle est engagé à force le bourrelet avant 262. Il est à noter que c'est cette partie en retrait 242d de la glace qui sert également à recevoir les éléments intermédiaires 244a-244c définissant les logements sphériques des trois points d'appui du réflecteur sur la glace. Cette partie 242d joue donc le rôle des parties 142a-142c de la glace 140 de la forme de réalisation précédente.

De même, le réflecteur 230 comporte sur une partie en collerette 238d s'étendant sur l'ensemble de sa périphérie une gorge 233 tournée vers l'extérieur, qui reçoit le bourrelet arrière 264 du soufflet.

Ladite partie en collerette 238d, qui peut être de contour extérieur circulaire ou non, remplit également le rôle des parties 138a-138c du réflecteur 130 de la forme de réalisation précédente.

Le soufflet 260 permet d'accepter, sans compromettre l'étanchéité réalisée, les mouvements relatifs du réflecteur et de la glace lorsque l'on procède au réglage en site ou en azimut de l'orientation du faisceau lumineux émis.

Bien entendu, la présente invention n'est nullement limitée à la forme de réalisation décrite ci-dessus et représentée sur les dessins, mais l'homme de l'art saura y apporter toute variante ou modification dans le cadre des revendications ci-après.

## Revendications

1. Projecteur de véhicule automobile, du type comportant une lampe (20), un réflecteur (30 ; 130 ; 230) dans lequel est montée la lampe, et une glace (40 ; 140); 240) apte à être logée dans une ouverture de la carrosserie (50 ; 150 ; 250) du véhicule, la glace étant fixée directement à la carrosserie dans la région de ladite carrosserie avoisinant l'ouverture, le projecteur étant dépourvu de boîtier, caractérisé en ce que le réflecteur est monté sur la glace par des moyens de montage (34a, 34b; 136a-c, 144a-c; 236a-c, 244a-c) du réflecteur (30 ; 130 ; 230) réglables en vue de l'ajustement de l'orientation du faisceau émis.

2. Projecteur selon la revendication 1, caractérisé en ce que la glace (40; 140; 240) est fixée directement sur la carrosserie (50; 150; 250) du véhicule par un ou plusieurs moyens choisis dans le groupe comprenant les moyens de vissage (52; 156), les moyens de clipsage, les moyens à encastrement (42b, 54) et les moyens de collage.

3. Projecteur selon l'une des revendications, caractérisé en ce qu'il est prévu des moyens d'étanchéité (260) entre le réflecteur (30; 130; 230) et la glace (40; 140; 240).

4. Projecteur selon la revendication 3, caractérisé en ce que les moyens d'étanchéité comprennent au moins un soufflet (260).

## Claims

1. A motor vehicle headlamp of the type comprising a lamp (20), a reflector (30; 130; 230) in which the lamp is mounted, and a glass (40; 140; 240) suitable for being received in an opening in the bodywork (50; 150; 250) of the vehicle, the glass being fixed directly to the bodywork in the region of said bodywork adjacent to the opening, the headlamp lacking its own box, and being characterized in that the reflector is mounted on the glass by means (34a, 34b; 136a-c, 144a-c; 236a-c, 244a-c) for mounting the reflector (30; 130; 230), which means are adjustable in order to adjust the direction of the emitted beam.

2. A headlamp according to claim 1, characterized in that the glass (40; 140; 240) is fixed directly to the bodywork (50; 150; 250) of the vehicle by one or more means selected from the group comprising: screw means (52; 156); snap-fastening means; mutual engagement means (42b, 54); and adhesive means.

3. A headlamp according to claim 1 or 2, characterized in that it is provided with means (260) for sealing between the reflector (30; 130; 230) and the glass (40; 140; 240).

4. A headlamp according to claim 3, characterized in that the sealing means comprise at least a bellows (260).

## Patentansprüche

1. Kraftfahrzeugscheinwerfer, umfassende eine Lampe (20), einen Reflektor (30; 130; 230), in den die Lampe eingebaut ist, und eine Abdeckscheibe (40, 140; 240), die in eine Öffnung der Karosserie (50; 150; 250) des Fahrzeugs eingesetzt werden kann, wobei die Abdeckscheibe direkt an der Karosserie in dem der Öffnung benachbarten Bereich der besagten Karosserie befestigt ist und wobei der Scheinwerfer ohne Gehäuse ausgeführt ist, **dadurch gekennzeichnet,** daß der Reflektor im Hinblick auf die Einstellung der Ausrichtung des abstrahlten Lichtbündels an der Abdeckscheibe durch verstellbare Montagemittel (34a, 34b; 136a-c, 144a-c; 236a-c, 244a-c) des Reflektors (30; 130; 230) angebracht ist.

2. Scheinwerfer nach Anspruch 1, **dadurch gekennzeichnet,** daß die Abdeckscheibe (40; 140; 240) direkt an der Karosserie (50; 150; 250) des Fahrzeugs durch ein oder mehrere Mittel befestigt ist, die aus der Gruppe mit Verschraubungsmitteln (52; 156), Aufklemmitteln, Einlaßmitteln (42b, 54) und Klebemitteln ausgewählt werden.

3. Scheinwerfer nach einem der Ansprüche 1 und 2, **dadurch gekennzeichnet,** daß Abdichtungsmittel (260) zwischen dem Reflektor (30; 130; 230) und der Abdeckscheibe (40; 140; 240) vorgesehen sind.

4. Scheinwerfer nach Anspruch 3 , **dadurch gekennzeichnet,** daß die Abdichtungsmittel mindestens einen Dichtungsbalg (260) umfassen.
